# EUROPÄISCHE PATENTANMELDUNG

(11) **EP 3 718 723 A1**
(43) Veröffentlichungstag der Anmeldung: **07.10.2020**
(21) Anmeldenummer: 20162807.0
(22) Anmeldetag: 12.03.2020
(51) Int. Cl.: B28B 13/02, B30B 11/08, B30B 15/30, G01F 11/22, G01F 15/12, B65D 90/58

(54) **DOSATOR MIT DOSATORSCHEIBEN FÜR PLATTENPRODUKTIONSANLAGEN**

(30) Priorität: 29.03.2019 DE 102019108339
(71) Anmelder: SR-Schindler Maschinen - Anlagetechnik GmbH, 93057 Regensburg Bayern (DE)
(72) Erfinder: Stöcker, Robert, 93197 Zeitlarn (DE)
(74) Vertreter: Hannke, Christian

(57) **Zusammenfassung**

Dosatoreinrichtung (1) für eine Plattenproduktionseinrichtung mit einer Einfülleinrichtung (2), insbesondere einem Einfülltrichter zum Einfüllen eines zu dosierenden Materials für die Produktion von Platten, mit einem Dosatortopf (23) zur Aufnahme des zu dosierenden Materials, wobei die Dosatoreinrichtung eine Mehrzahl von Dosatorscheiben (24, 25, 26) aufweist. Erfindungsgemäß sind diese Dosatorscheiben (24, 25, 26) derart angeordnet, dass sie durch eine vorgegebene Verschiebung bezüglich einander in einer vorgegebenen Verschieberichtung (V) voneinander beabstandet werden können.

## Beschreibung

Die vorliegende Erfindung betrifft Plattenproduktionsanlagen. Derartige Plattenproduktionsanlagen sind aus dem Stand der Technik bekannt und dienen zum Herstellen von Platten, beispielsweise Terrassen- oder Gehwegplatten. Konkret betrifft die vorliegende Erfindung einen Dosator, beziehungsweise eine Dosatoreinrichtung mit Dosatorscheiben für eine Plattenproduktionsanlage. Plattenproduktionsanlagen für insbesondere Terrazzo- und Betonwerksteinplatten, Pflastersteine in Hermetikqualität, Terassen- und Gehwegplatten, Einschicht- und Zweischichtplatten, mit oder ohne kombinierten Filter, oder Hermetikpressverfahren, sind häufig derart ausgebildet, dass sie in kreisförmiger Darstellung eine Hermetikpresse aufweisen, die unter anderem an einer Position eine Dosatoreinrichtung aufweist.

Eine derartige Dosatoreinrichtung dient zum Dosieren des zu pressenden Materials, in etwa eine Pressform. Anschließend kann ein Pressvorgang durchgeführt werden.

Für derartige Dosatoreinrichtungen sind unterschiedliche Konzepte bekannt, beispielsweise Scheibendosatoreinrichtungen. Derartige Dosatoreinrichtungen müssen in dem Innenbereich, also üblicherweise innerhalb oder unterhalb eines Dosatortopfes, in dem das Material für die Produktion der Platten vorhanden ist, gereinigt werden. Insbesondere darin angeordnete Dosatorscheiben sollten, beispielsweise bei einem Farb- oder Rezepturwechsel einem Reinigungsverfahren unterworfen werden, um die gewünschte Qualität der zu pressenden Platten sicherzustellen.

Im Stand der Technik sind derartige Reinigungsverfahren vergleichsweise schwer durchführbar, da die mehreren aufeinander liegenden Platten, welche üblicherweise mit einzelnen Durchgangsöffnungen versehen sind, um Material durchtreten zu lassen ein Zugänglichmachen zu denjenigen Oberflächen der Platten, die aufeinander liegen erschweren.

Der vorliegenden Erfindung liegt daher die Aufgabe zugrunde, einer Reinigung von derartigen Dosatoreinrichtungen mit einer Mehrzahl an Dosatorscheiben, die insbesondere in dem Dosator angeordnet sind, zu erleichtern. Daneben soll weiterhin der Zugang zu derartigen Dosatorscheiben erlangt werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Dosatoreinrichtung für eine Plattenproduktionseinrichtung weist eine Einfülleinrichtung und insbesondere einen Einfülltrichter zum Einfüllen eines zu dosierenden Materials für die Produktion von Platten auf. Daneben ist eine Dosatoraufnahmeeinrichtung und insbesondere ein Dosatortopf vorgesehen, der zur Aufnahme des zu dosierenden Materials dient, wobei die Dosatoreinrichtung eine Vielzahl von Dosatorplatten und/oder Dosatorscheiben aufweist.

Erfindungsgemäß sind die Dosatorscheiben derart angeordnet, dass sie durch eine vorgegebene Verschiebung bezüglich einander in einer vorgegebenen Verschieberichtung voneinander beabstandet werden können.

Bevorzugt ist dabei ein Verschieben dieser Dosatorscheiben, insbesondere bezüglich einander, durchführbar, um deren einzelne Oberflächen, insbesondere zu Reinigungszwecken zugängig zu machen. Besonders bevorzugt handelt es sich bei den Dosatorscheiben um im Wesentlichen kreisförmig ausgebildete Dosatorscheiben. Bevorzugt weist die Dosatoreinrichtung wenigstens zwei, bevorzugt wenigstens drei derartige Dosatorscheiben auf. Bevorzugt liegen in einem Arbeitsbetrieb der Dosatoreinrichtung diese Dosatorscheiben flächig aneinander.

Bevorzugt weist die Dosatoreinrichtung wenigstens zwei und allgemein mehrere, insbesondere parallel zueinander angeordnete Dosatorscheiben auf, die in einem unteren Bereich der Dosatoreinrichtung einer Plattenproduktionsanlage vorhanden sind und besonders bevorzugt derart mit dem Dosatortopf verbunden sind, dass diese räumlich durch eine Verschiebung und insbesondere eine Parallelverschiebung und besonders bevorzugt eine Vertikalverschiebung, voneinander getrennt werden können.

Hierdurch ist ein verbesserter Zugang bei einer Reinigung und insbesondere bei einer Nassreinigung oder einem Tausch der Dosatoreinrichtungen und/oder von Dosatorbuchsen zu den einzelnen Scheibenoberflächen möglich.

Die Dosatorbuchse dient bevorzugt dazu, das Dosiervolumen der Dosatoreinrichtung zu bestimmen. Bevorzugt handelt es sich bei der Dosatorbuchse um ein Element bzw. eine Buchse, welche in eine Öffnung mindestens einer Dosatorscheibe eingesetzt wird. Insbesondere ist diese Buchse dabei in eine mittlere von mehreren, insbesondere drei Dosatorscheiben eingesetzt.

Besonders bevorzugt weist die Dosatoreinrichtung eine wenigstens teilweise an der Dosatoreinrichtung angeordnete Verstelleinrichtung auf, die zum Verstellen der Dosatorbuchse dient.

Bevorzugt werden hierdurch einzelne oder mehrere Scheiben voneinander getrennt. Dies wird besonders bevorzugt dadurch ermöglicht, dass eine in Vertikalrichtung gerichtete Auf- und Abwärtsbewegung der einzelnen Dosatorscheiben in vorzugsweise automatisierter Weise möglich ist. Besonders bevorzugt weisen die Dosatorscheiben jeweils ebene Oberflächen auf. Besonders bevorzugt sind diese Dosatorscheiben, zumindest in einem Arbeitsbetrieb, bezüglich einander drehbar.

Bei einer bevorzugten Ausführungsform liegen die Dosatorscheiben in einem Arbeitsbetrieb wenigstens teilweise aneinander an oder im Wesentlich aneinander an. Dabei ist es möglich, dass im Arbeitsbetrieb die Dosatorscheiben bezüglich einander gleiten. Es wäre jedoch auch möglich, dass zwischen den Dosatorscheiben ein kleiner Spalt vorgesehen ist.

Bei einer weiteren bevorzugten Ausführungsform verläuft die Verschieberichtung senkrecht zu einer Ebene der Dosatorscheiben. In einem montierten Zustand der Dosatoreinrichtung handelt es sich hierbei insbesondere um eine vertikale Richtung. Besonders bevorzugt sind die Dosatorscheiben entlang ihrer Drehachse bezüglich einander verschiebbar.

Bei einer bevorzugten Ausführungsform weist wenigstens eine Dosatorscheibe und weiter bevorzugt mehrere, und besonders bevorzugt alle Dosatorscheiben, wenigstens eine Durchgangsöffnung auf, durch welche das zu tretende Material treten kann. Insbesondere durch die Wahl der Stellungen der Dosatorscheiben bezüglich einander kann die Dosierung erreicht werden.

Bei einer weiteren bevorzugten Ausführungsform sind die Dosatorscheiben unterhalb eines Dosatortopfes angeordnet. Dabei ist es möglich, dass eine Dosatorscheibe den unteren Abschluss dieses Dosatortopfes, beziehungsweise der Aufnahmeeinrichtung für das zu verarbeitende Material bildet. Besonders bevorzugt weist die Dosatoreinrichtung einen Einfülltrichter auf, um das Pressmaterial der Aufnahmeeinrichtung zu zuführen. Eine erste Dosatorscheibe ist dabei bevorzugt unterseitig an dem Dosatortopf angeordnet.

Bei einer besonders bevorzugten Ausführungsform ist eine Dosatorscheibe drehfest gegenüber dem Dosatortopf ausgebildet. Insbesondere ist diese Dosatorscheibe fest mit diesem Dosatortopf verbunden und dient insbesondere als Boden des Dosatortopfes, beziehungsweise schließt diesen nach unten hin ab. Bevorzugt ist jedoch auch diese Dosatorscheibe entlang der Verschieberichtung gegenüber dem Dosatortopf verschiebbar, um eine Reinigung derselben zu erleichtern. Es wäre jedoch auch möglich, dass die Dosatorscheibe fest an dem Dosatortopf angeordnet bleibt, da eine Reinigung derselben auch durch den Dosatortopf selbst hindurch möglich wäre.

Bevorzugt ist eine Querschnittfläche dieser Dosatorscheibe gleich groß oder größer als diejenige des Dosatortopfes.

Bei einer weiteren bevorzugten Ausführungsform sind die Dosatorscheiben parallel zueinander angeordnet. Dabei können diese Dosatorscheiben insbesondere entlang einer Drehachse parallel zueinander angeordnet sein.

So wäre es beispielsweise möglich, dass eine zweite Dosatorscheibe parallel zu einer ersten Dosatorscheibe angeordnet ist. Bevorzugt kann im Anschluss daran, das heißt insbesondere unterhalb der zweiten Dosatorscheibe noch eine dritte Dosatorscheibe (bevorzugt ebenfalls parallel) angeordnet sein.

Die oben erwähnten Durchgangslöcher in den Dosatorscheiben können dabei an unterschiedlichen Positionen angeordnet sein, bevorzugt jedoch an Positionen, die sich in einer radialen Richtung zumindest überschneiden. Bevorzugt sind die besagten Öffnungen in einer radialen Richtung der Dosatorscheiben an im Wesentlichen den gleichen Positionen angeordnet.

Da ist es möglich, dass diese Öffnungen eine kreisförmige Gestalt aufweisen. Die Öffnungen können jedoch auch einen hiervon abweichenden Querschnitt aufweisen, beispielsweise einen segmentförmigen Querschnitt.

Durch eine Drehstellung der Dosatorscheiben zueinander kann insbesondere oder insgesamt der Durchgangsquerschnitt eingestellt werden und damit eine Dosierung erreicht werden.

Bei einer weiteren bevorzugten Ausführungsform weist die Dosatoreinrichtung wenigstens eine Hebeeinrichtung zum Heben und/oder Senken wenigstens einer der Dosatorscheiben auf. Insbesondere dient dabei die Hebeeinrichtung zum Heben und/oder Senken der zweiten oder der dritten Dosatorscheibe, das heißt diejenigen Dosatorscheiben, die nicht an dem Dosatortopf angeordnet sind.

Besonders bevorzugt ist diese Hebeeinrichtung außerhalb der Dosatorscheiben angeordnet. Dabei kann diese Hebeeinrichtung ein Greifmittel aufweisen, welches zum Untergreifen wenigstens einer Dosatorscheibe dient oder welches seitlich an die Dosatorscheiben angekoppelt sein kann. Daneben können auch mehrere Hebeeinrichtungen vorgesehen sein, insbesondere um die beiden unteren Scheiben heben und senken zu können.

Bei einer bevorzugten Ausführungsform handelt es sich bei der Hebeeinrichtung um links- und/oder rechtsseitig von dem Dosatortopf angeordnete Antriebseinrichtungen, beispielsweise Zylinder, die besonders bevorzugt oberseitig mittels einer Gelenkaufhängung an einem Bauteil des Grundgestells der Dosatoreinrichtung aufgehängt sind. Es könnten auch mehrere, beispielsweise drei derartige Antriebseinrichtungen vorgesehen sein. Neben oder anstelle der hier beschriebenen Zylinder könnten auch Spindelantriebe oder dergleichen vorgesehen sein oder auch linearmotorische Antriebe.

Bevorzugt sind diese Zylindereinrichtungen unterseitig mit ausfahrbaren Stangen und bevorzugt gelenkig an Gelenkköpfen mit hakenartigen Elementen verbunden, welche eine der Dosatorscheiben, beispielsweise die dritte Dosatorscheibe untergreifen und bevorzugt beidseitig untergreifen und gegebenenfalls damit auch fest verbinden.

Durch diese Hebeeinrichtungen können die einzelnen Dosatorscheiben in unterschiedliche Positionszustände gefahren werden.

In einer Stellung liegen alle Dosatorscheiben geschlossen an dem Dosatortopf an. Dabei kann beispielsweise ein entsprechender Hebezylinder eingefahren sein und ein Flansch, sowie eine Distanzbuchse und auch eine Spannmutter sind montiert.

In einem weiteren Zustand wird die Dosatorscheibe in einem oberen Zustand gehalten und eine zweite Dosatorscheibe kann nach unten gefahren werden. Dabei können beispielsweise ein Flansch und eine Distanzbuchse demontiert werden. In diesem Falle ist eine Reinigung und ein Tausch von Dosatorbuchsen möglich.

Bei einer weiteren bevorzugten Ausführungsform ist in einer Dosatorscheibe eine Führungsbuchse angeordnet. Bevorzugt kann in diese Führungsbuchse ein Führungszylinder, der bevorzugt an einer weiteren Dosatorscheibe angeordnet ist, einfahren, beziehungsweise gegenüber dieser gleiten.

Bevorzugt ist dabei zumindest eine zweite Dosatorscheibe gegenüber einer dritten Dosatorscheibe in der Verschieberichtung beweglich gelagert. Durch diese Anordnung ist auch eine Drehung einzelner Dosatorscheiben bezüglich einander möglich. Zu diesem Zwecke weist die Dosatoreinrichtung eine Antriebseinrichtung auf, welche zum Drehen mindestens einer Dosatorscheibe und bevorzugt zum Drehen mehrerer Dosatorscheiben geeignet und bestimmt ist. Bevorzugt erfolgt diese Drehung bezüglich einer Drehachse, die senkrecht zu der jeweiligen Dosatorscheibe steht. Anstelle oder neben einer Drehung ist jedoch auch eine Verschiebung einer Dosatorscheibe bezüglich einer weiteren Dosatorscheibe möglich, beispielsweise ein Verschieben in einer vorgegebenen Verschieberichtung insbesondere einer geradlinigen Verschieberichtung.

Bei einer weiteren bevorzugten Ausführungsform sind wenigstens zwei Dosatorscheiben unabhängig voneinander bewegbar und insbesondere heb- und/oder senkbar. Damit sind bevorzugt sämtliche Ober- und Unterseiten der jeweiligen Dosatorscheiben, beispielsweise für einen Reinigungsvorgang zugänglich.

Es wäre in einer Position auch möglich, dass die zweite und dritte Scheibe aneinander liegend von der ersten Dosatorscheibe beabstandet sind. Auch wäre es möglich, dass die zweite Dosatorscheibe an der ersten Scheibe anliegt und die dritte beabstandet wird. Damit ist es sowohl möglich, dass die unterste Dosatorscheibe beabstandet wird, als auch die mittlere (falls drei Dosatorscheiben vorhanden sind). Auf diese Weise ist eine ober- oder unterseitige Reinigung der mittleren Scheibe möglich.

Bei einer weiteren bevorzugten Ausführungsform ist die Hebeeinrichtung von wenigstens einer Dosatorscheibe entkoppelbar. Auf diese Weise kann die Zugänglichkeit der Dosatorscheiben weiter verbessert werden. Dabei ist es möglich, dass die Hebeeinrichtung insbesondere von der mittleren, beziehungsweise zweiten, Dosatorscheibe entkoppelt werden kann. Es ist jedoch auch möglich, dass die Hebeeinrichtung von der untersten, beziehungsweise dritten, Dosatorscheibe entkoppelt werden kann. Zum Koppeln und Entkoppeln können dabei Hakenelemente vorgesehen sein, welche in entsprechende Elemente der Dosatorscheiben einhaken können.

Bei einer weiteren bevorzugten Ausführungsform ist wenigstens eine Dosatorscheibe bezüglich einer vorgegebenen Drehachse drehbar. Besonders bevorzugt handelt es sich hier um eine Drehachse, die senkrecht zu der Ebene der Dosatorscheibe steht. Besonders bevorzugt sind zwei Dosatorscheiben drehbar und insbesondere auch unabhängig voneinander drehbar. Es wäre jedoch auch möglich, dass lediglich die mittlere, beziehungsweise zweite, Dosatorscheibe drehbar ist. Diese Drehung erfolgt wie oben erwähnt zum Ändern der Dosierung.

Die vorliegende Erfindung ist weiterhin auf eine Plattenproduktionsanlage mit einer Dosatoreinrichtung der oben bezeichneten Art gerichtet. Bevorzugt ist die Dosatoreinrichtung an einem Träger angeordnet, insbesondere einem bewegbaren Träger und insbesondere an einem um eine vorgegebene Drehachse drehbaren bzw. schwenkbaren Träger. Bei einer weiteren bevorzugten Ausführungsform weist die Plattenproduktionsanlage eine Presseinrichtung zum Pressen von Platten auf. Dabei kann diese Presseinrichtung eine Pressform aufweisen, in welche die Dosatoreinrichtung zu pressendes Material eindosieren kann.

Daneben weist bevorzugt die Plattenproduktionsanlage weitere Arbeitsstationen auf, die unterschiedliche Arbeitsschritte an dem Material bzw. den hieraus entstehenden Platten durchführen.

Dabei ist bevorzugt ein bewegbarer und insbesondere ein drehbarer Transportträger vorgesehen, der dazu dient, das Material bzw. die daraus entstehenden Platten von einer Arbeitsstation zur nächsten Arbeitsstation zu fördern. Bevorzugt handelt es sich bei der Plattenproduktionsanlege daher um eine Rundläufermaschine. Die einzelnen Arbeitsstationen wie beispielsweise die Dosatoreinrichtung sind gegenüber dieser Drehbewegung des Transportträgers vorteilhaft stationär angeordnet.

Die vorliegende Erfindung ist weiterhin auf ein Verfahren zum Behandeln und insbesondere Reinigen einer Dosatoreinrichtung für eine Plattenproduktionseinrichtung gerichtet. Dabei weist die Dosatoreinrichtung eine Einfülleinrichtung, insbesondere einen Einfülltrichter zum Einfüllen eines zu dosierenden Materials für die Produktion von Platten auf, sowie auch einen Dosatortopf zur Aufnahme des zu dosierenden Materials. Weiterhin weist die Dosatoreinrichtung eine Mehrzahl von Dosatorscheiben auf. Erfindungsgemäß werden diese Dosatorscheiben wenigstens zeitweise in einer vorgegebenen Verschieberichtung gegenüber einander verschoben, insbesondere um derart gegenüber einander beabstandet zu werden.

Besonders bevorzugt werden wenigstens zeitweise die Dosatorscheiben in einer Richtung bezüglich einander verschoben, die senkrecht zu den Dosatorscheiben, beziehungsweise den Oberflächen steht. Insbesondere können diese Dosatorscheiben bezüglich einer Drehachse verschoben werden, mittels derer wenigstens eine der Dosatorscheiben drehbar gelagert wird.

Bei einer weiteren bevorzugten Ausführungsform können die Dosatorscheiben in wenigstens zwei unterschiedliche Stellungen bezüglich einander verschoben werden. Dabei können beispielsweise ausgehend von einer Grundstellung, in der alle Dosatorscheiben aneinander anliegen entweder die erste und zweite Dosatorscheibe voneinander getrennt werden oder auch die zweite und dritte Dosatorscheibe. Auch wäre es möglich, alle Dosatorscheiben voneinander zu trennen, insbesondere um eine gleichzeitige Reinigung derselben vorzunehmen.

Weitere Vorteile und Ausführungsformen ergeben sich aus den beigefügten Zeichnungen: Darin zeigen:
- Fig. 1: eine Darstellung einer Plattenproduktionseinrichtung;
- Fig. 2: eine Darstellung einer Dosatoreinrichtung in einem ersten Zustand der Dosatorscheiben;
- Fig. 3: eine Darstellung der Dosatoreinrichtung in einem zweiten Zustand der Dosatorscheiben;
- Fig. 4: eine Darstellung der Dosatoreinrichtung in einem dritten Zustand der Dosatorscheiben;
- Fig. 5: eine Darstellung der Dosatoreinrichtung in einem vierten Zustand der Dosatorscheiben;
- Fig. 6: eine Darstellung der Dosatoreinrichtung in einem entkoppelten Zustand der Dosatorscheiben.

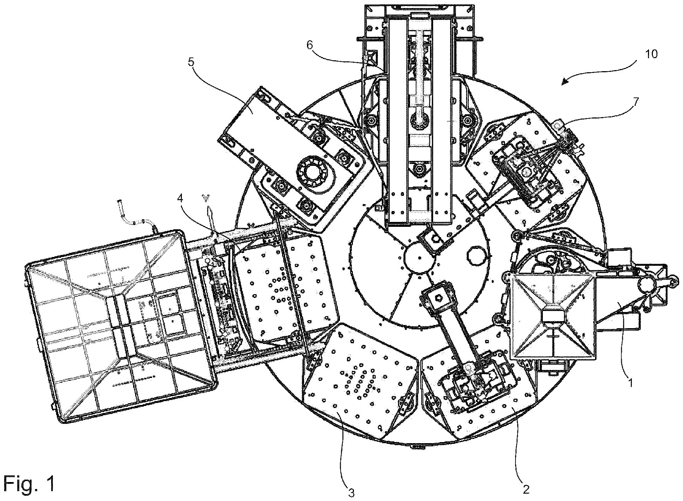

Fig. 1 zeigt eine erfindungsgemäße Plattenproduktionsanlage 10. Diese weist einen Drehteller 52 auf, an dem eine Vielzahl von bearbeiteten Bearbeitungsstationen angeordnet ist. Dabei bezieht sich dieses Bezugszeichen 1 auf eine hier genauer beschriebene Dosatoreinrichtung, welche das zuzuführende Material in eine Pressform dosiert.

Das Bezugszeichen 2 kennzeichnet eine Verteilstation, welche das durch die Dosatoreinrichtung 1 in eine Form, beispielsweise eine Pressform eingefüllte Material verteilt bzw. eine gleichmäßige Verteilung dieses Materials bewirkt.

Das Bezugszeichen 3 bezieht sich auf eine Freistation. Diese kann besetzt werden, um zusätzliche, optionale Arbeitsschritte durchzuführen, beispielsweise zur Herstellung von Sondermodellen von Platten

Das Bezugszeichen 4 kennzeichnet eine Hinterbeton - Befüllstation. Diese kann beispielsweise eine weitere bzw. Materialschicht hinzufügen. Auf diese Weise können mehrschichtige Platten erzeugt werden. Bei der Herstellung von einschichtigen Platten kann diese Station auch entfallen.

Das Bezugszeichen 5 zeigt eine Vorverdichtungseinrichtung . Mittels dieser Station wird das in die Pressform eingefüllte Material (vor dem eigentlichen Pressvorgang) vorverdichtet.

Das Bezugszeichen 6 zeigt die Pressstation, in der die herzustellenden Platten gepresst werden.

Das Bezugszeichen 7 kennzeichnet eine Ausgabestation bzw. Entnahmestation, in der die gefertigten Platten aus ihrer Form entnommen bzw. herausgepresst werden.

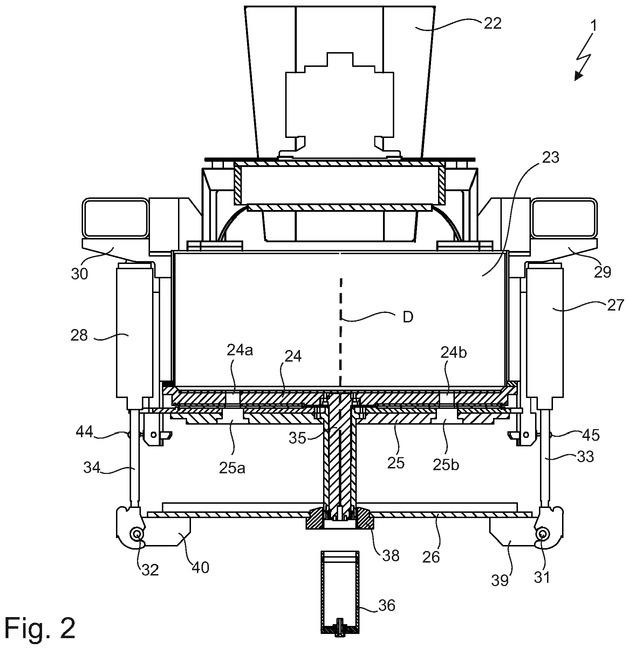

Das Bezugszeichen 52 kennzeichnet einen drehbaren Drehteller bzw. Transportträger. Mittels dieses Transportträgers wird das Material von einer Station im Taktbetrieb zu der nächsten Station transportiert. Die einzelnen Stationen 1 - 7 sind gegenüber dieser Drehbewegung des Transportträgers stationär angeordnet. Figur 2 zeigt eine Darstellung der Dosatoreinrichtung 2. Diese weist eine Einführeinrichtung 22, wie insbesondere einen Einführtrichter auf. Unterhalb dieses Einführtrichters ist ein Dosatortopf 23 beziehungsweise eine Aufnahmeeinrichtung für das zu pressende Material angeordnet. Unterhalb des Dosatortopfs 23 ist eine erste Dosatorscheibe 24 vorgesehen, welche Dosatorscheibenöffnungen 24a und 24b aufweist.

Bei der hier gezeigten Ausführungsform ist diese Dosatorscheibe in einem Arbeitsbetrieb fest an dem Dosatortopf 23 angeordnet. Zu Reinigungszwecken ist es jedoch möglich, die Dosatorscheibe von dem Dosatortopf 23 zu beabstanden, d.h. hier insbesondere nach unten abzusenken. Die Dosatorscheibe kann jedoch auch fest als Bodenscheibe mit dem Dosatortopf 23 verbunden sein

Das Bezugszeichen 25 kennzeichnet eine zweite Dosatorscheibe, die ebenfalls der Öffnungen 25a und 25b aufweist. Man erkennt hier, dass diese Öffnungen in dem gleichen radialen Abstand zu einem Mittelpunkt der Dosatorscheibe 25 angeordnet sind, wie die Öffnungen 24a, 24b bezüglich der Dosatorscheibe 24. Daher ist es möglich, dass die Öffnungen 24a, 24b derart mit den Öffnungen 25a, 25b in Deckung gebracht werden können, dass Material durch beide Öffnungen hindurch nach unten treten kann. Die zweite Dosatorscheibe ist hier parallel zu der ersten Dosatorscheibe 24 angeordnet.

Die Dosatorscheibe 25 ist bezüglich einer Drehachse D drehbar gelagert. Auch diese Weise kann ein Öffnungsquerschnitt für das durch die Scheiben tretende Material geändert werden.

Das Bezugszeichen 26 kennzeichnet eine dritte Dosatorscheibe, die hier unterhalb der zweiten Dosatorscheibe 25 angeordnet ist. Auch diese kann wiederum Öffnungen (nicht gezeigt) aufweisen. Diese dritte Dosatorscheibe 25 ist hier in einem abgesenkten Zustand gezeigt, d.h. in einem Zustand, in dem sie von der Dosatorscheibe 25 beabstandet ist. In diesem Zustand ist ein Reinigen der Oberseite dieser dritten Dosatorscheibe 26 sowie der Unterseite der zweiten Dosatorscheibe möglich.

Das Bezugszeichen 36 kennzeichnet eine Distanzbuchse, die zum Abstand halten zwischen den Dosatorscheiben geeignet und bestimmt ist. Daneben dient diese Distanzbuchse zum Fixieren und/oder Stabilisieren der unteren Dosatorscheibe gegenüber dem Boden des Dosatortopfes und/oder der oberen Dosatorscheibe.

Die Dosatorscheibe 25 kann, wie oben erwähnt, dabei drehbar bezüglich der Drehachse D ausgespaltet sein. Das Bezugszeichen 35 kennzeichnet eine entsprechende Achse, die zur Lagerung der einzelnen Dosatorscheiben dient. Auch wäre es möglich, dass die Dosatorscheibe 26 drehbar ist. Das Bezugszeichen 38 kennzeichnet einen Flansch zum Halten und/oder Führen der unteren Dosatorscheibe 26.

Wie durch einen Vergleich der nachfolgenden Figuren 2 bis 6 erläutert, sind die einzelnen Dosatorscheiben 24, 25, 26 mit den einzelnen Durchgangslöchern versehen, hierdurch eine Dosierung des Materials auf die darunter liegenden Pressformen (nicht gezeigt) in geeigneter Weise zu ermöglichen.

Die Bezugszeichen 27 und 28 kennzeichnen links- und rechtsseitig an dem Dosatortopf 23 angeorndete Zylinder, die hier oberseitig mittels einer Gelenkaufhängung 29, 30 an einen Bauteil des Grundgestells der Dosatoreinrichtung aufgehängt sind.

Unterseitig sind diese Zylinder 27, 28 mit den ausfahrbaren Stangen 33 und 34 gelenkig an Gelenkköpfen 31 und 32 mit den backenartigen Elementen 39 und 40 verbunden. Diese backenartigen Elemente untergreifen die dritte Dosatorscheibe 26 beidseitig und können gegebenenfalls auch mit ihr verbunden sein. Die Zylinder 27 und 28 können beispielsweise als Pneumatikzylinder ausgebildet sein. Daneben könnten jedoch an dieser Stelle auch linearmotorische Antriebe verwendet werden. Auch wäre der Einsatz von Hydraulikzylindern denkbar. Daneben könnten auch Gewindestangen bzw. Spindeln Anwendung finden.

Die nachfolgenden Figuren 2 bis 6 zeigen unterschiedliche Positionen der Dosatoreinrichtung. Bei der in Figur 2 gezeigten Situation wird die Dosatorscheibe 25 oben, das heißt an der ersten Dosatorscheibe 24 gehalten, und die Dosatorscheibe 26 nach unten gefahren. Dabei kann hier die Distanzbuchse 36 demontiert sein. In dieser Situation können die Zylinder 27 und 28 ausgefahren sein. In dieser Situation kann insbesondere eine Unterseite der Dosatorscheibe 25 gereinigt werden, oder auch eine Oberseite der Dosatorscheibe 26. Auch können in dieser Situation die Dosatorbuchsen bevorzugt getauscht werden.

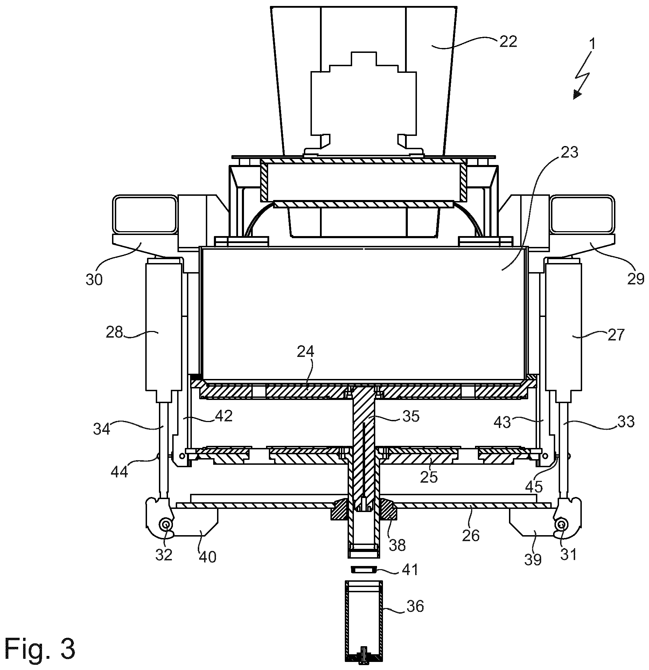

Bei der in Figur 3 gezeigten Situation sind die Dosatorscheiben 25 und 26 nach unten gefahren. Die Distanzscheibe 36 und die Spannmutter 41 sind demontiert und die Zylinder 27 und 28 und weitere Hubelemente 42 und 43 sind ausgefahren. In dieser Position ist eine beidseitige Reinigung aller Dosatorscheiben, das heißt der oberen und der unteren Flächen jeweils denkbar, da sämtliche Dosatorscheiben 24, 25 und 26 voneinander beabstandet sind.

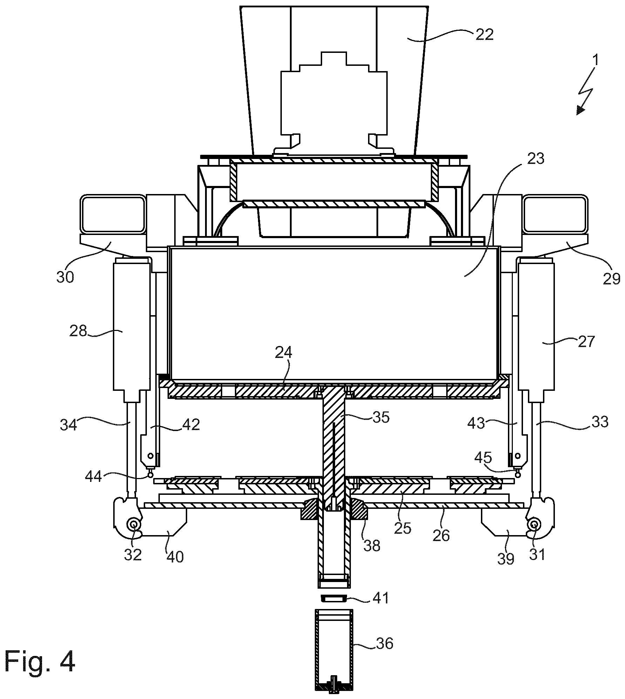

Bei der in Figur 4 gezeigten Ausführungsform sind die Dosatorscheiben 25 und 26 gemeinsam nach unten gefahren. Bevorzugt sind hier die Hakenelemente 44 und 45, die zum Halten der zweiten Dosatorscheibe dienen in ihrer Funktion deaktiviert. Bei der in Fig. 4 gezeigten Situation ist ein Reinigen der Unterseite der ersten Dosatorscheibe 24 und ein Reinigen der Oberseite der zweiten Dosatorscheibe 25 möglich.

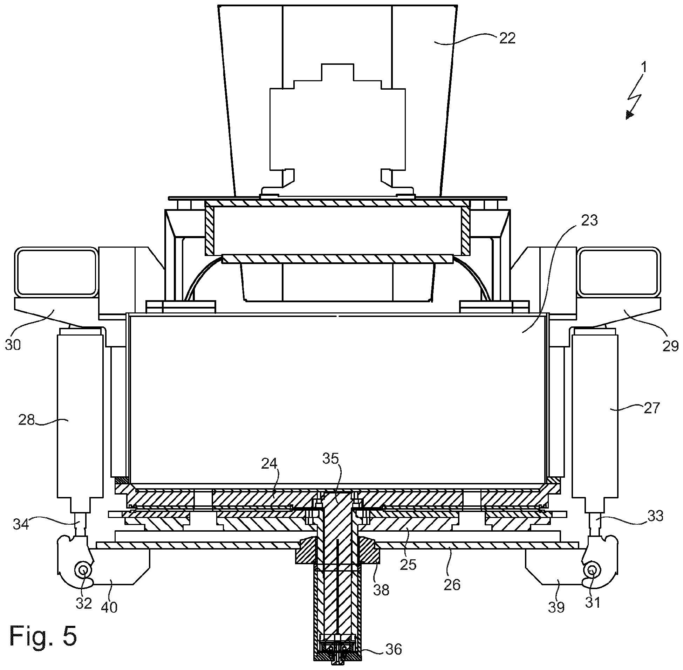

Bei der in Fig. 5 gezeigten Situation liegen alle Dosatorscheiben aneinander und sind auch jeweils montiert. Damit zeigt Fig. 5 die Situation in einem Arbeitsbetrieb der Dosatoreinrichtung 1

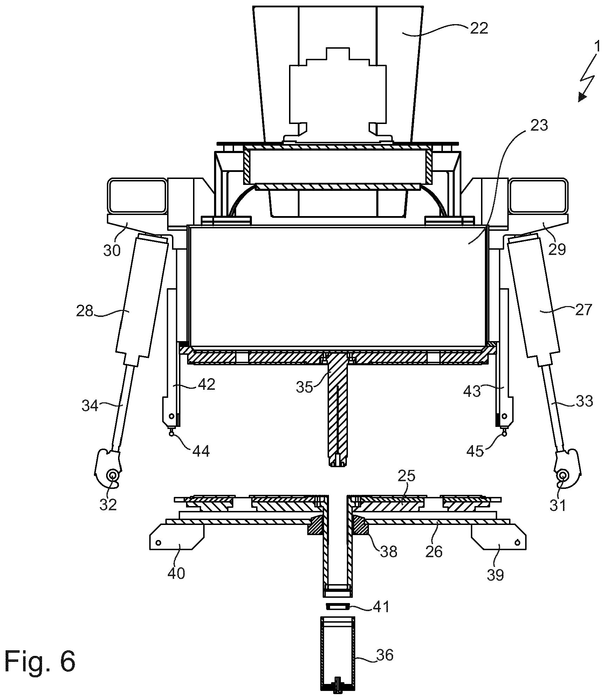

Bei der in Figur 6 gezeigten Situation sind die Dosatorscheiben 25 und 26 komplett demontiert durch aushängbare Gelenkköpfe 31 und 32, die in den Zylindern 27 und 28 vorgesehen sind.

Damit kann insbesondere durch ein Ausfahren der angebrachten Zylinder 27 und 28, wodurch die Zylinderstangen 33 und 34 nach unten gefahren werden, ebenso ein nach unten fahren der dritten Dosatorscheibe 26 erreicht werden, da diese an den Backen 39, 40 angebracht, beziehungsweise auf diesen aufliegend vorhanden ist.

Auf diese Weise kann die dritte Dosatorscheibe 26 entlang der Achse 35 parallel zu den übrigen Dosatorscheiben nach unten gefahren werden. Hierdurch ergibt sich, dass zumindest die dritte Dosatorscheibe für den bevorstehenden Nassreinigungsprozess freiliegt.

Alternativ oder zusätzlich kann jedoch auch, wie in Figur 4 dargestellt, die zweite Dosatorscheibe nach unten gefahren werden. In diesem Zustand liegen die zweite und dritte Dosatorscheibe fest aufeinander. Damit ist nur ein geringer Abstand, wenn überhaupt, zwischen den zweiten und dritten Dosatorscheiben 25 und 26 vorhanden. Allerdings kann hierdurch die zweite Dosatorscheibe oberseitig, also zur ersten Dosatorscheibe hin und ebenso eine Unterseite der ersten Dosatorscheibe 24 gereinigt werden.

Ein Abstand zwischen der ersten und zweiten Dosatorscheibe ist vorhanden.

Bei dem in Figur 3 gezeigten Zustand ist die zweite Dosatorscheibe sowohl von der ersten Dosatorscheibe als auch von der dritten Dosatorscheibe beabstandet. Dies wird dadurch erreicht, dass eine erfindungsgemäße Distanzbuchse von der Dosatoreinrichtung ebenso wie eine Spannmutter 41 demontiert wird. Die zweite Dosatorscheibe kann von den backenartigen Elementen 39, 40 gehalten werden.

Die Hankenelemente 44 und 45 halten hier die zweite Dosatorscheibe auf ungefähr halber Höhe.

Wie oben erwähnt können in diesem Zustand in dem alle Dosatorscheiben beabstandet sind eine Nassreinigung der Oberflächen, also der Ober- und Unterseiten sämtlicher Dosatorscheiben erfolgen.

Sobald auch ein derartiges Trennen der zweiten Dosatorscheibe von der dritten Dosatorscheibe nicht mehr erwünscht ist, können die Hakenelemente ausgehakt werden, nachdem sie die zweite Scheibe zuvor abgelegt haben. Dies ist in Figur 4 dargestellt.

Insgesamt kann hierdurch ermöglicht werden, dass die Dosatorscheiben in unterschiedlichen Abständen zueinander angeordnet werden können, und hierdurch ein optimales Reinigen der Dosatorscheibenoberflächen zu ermöglichen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Dosatoreinrichtung
- 2: Verteilstation
- 3: Freistation
- 4: Hinterbeton - Befüllstation
- 5: Vorverdichtungseinrichtung
- 6: Pressstation
- 7: Entnahmestation
- 10: Plattenproduktionsanlage
- 22: Einfülltrichter
- 23: Dosatortopf
- 24: erste Scheibe
- 25: zweite Scheibe
- 26: dritte Scheibe
- 27: Zylinder
- 28: Zylinder
- 29: Gelenkaufhängung
- 30: Gelenkaufhängung
- 31: Gelenkkopf
- 32: Gelenkkopf
- 33: Stange
- 34: Stange
- 35: Achse
- 36: Distanzbuchse
- 38: Absatz/Flansch
- 39: backenartiges Element
- 40: backenartiges Element
- 41: Spannmutter
- 42: Hubelemente
- 43: Hubelemente
- 44: Hackenenlemente
- 45: Hackenelemente

## Patentansprüche

1. Dosatoreinrichtung (1) für eine Plattenproduktionseinrichtung mit einer Einfülleinrichtung (22), insbesondere einem Einfülltrichter zum Einfüllen eines zu dosierenden Materials für die Produktion von Platten, mit einem Dosatortopf (23) zur Aufnahme des zu dosierenden Materials, wobei die Dosatoreinrichtung eine Mehrzahl von Dosatorscheiben (24, 25, 26) aufweist,
**dadurch gekennzeichnet, dass**
diese Dosatorscheiben (24, 25, 26) derart angeordnet sind, dass sie durch eine vorgegebene Verschiebung bezüglich einander in einer vorgegebenen Verschieberichtung (V) voneinander beabstandet werden können.

2. Dosatoreinrichtung nach Anspruch 1,
**dadurch gekennzeichnet, dass**
die Dosatorscheiben (24, 25, 26) in einem Arbeitsbetrieb wenigstens teilweise aneinander anliegen.

3. Dosatoreinrichtung nach wenigstens einem der vorangegangenen Ansprüche,
**dadurch gekennzeichnet, dass**
die Verschieberichtung senkrecht zu einer Ebene der Dosatorscheiben (24, 25, 26) verläuft

4. Dosatoreinrichtung nach wenigstens einem der vorangegangenen Ansprüche,
**dadurch gekennzeichnet, dass**
die Dosatorscheiben (24, 25, 26) jeweils wenigstens eine Durchgangsöffnung aufweisen, durch welche das zu dosierende Material treten kann.

5. Dosatoreinrichtung nach wenigstens einem der vorangegangenen Ansprüche,
**dadurch gekennzeichnet, dass**
die Dosatorscheiben (24, 25, 26) unterhalb des Dosatortopfes (23) angeordnet sind.

6. Dosatoreinrichtung nach wenigstens einem der vorangegangenen Ansprüche,
**dadurch gekennzeichnet, dass**
eine Dosatorscheibe (24) drehfest gegenüber dem Dosatortopf ausgebildet ist.

7. Dosatoreinrichtung nach wenigstens einem der vorangegangenen Ansprüche,
**dadurch gekennzeichnet, dass**
die Dosatorscheiben (24, 25, 26) parallel zueinander angeordnet sind.

8. Dosatoreinrichtung nach wenigstens einem der vorangegangenen Ansprüche,
**dadurch gekennzeichnet, dass**
die Dosatoreinrichtung wenigstens eine Hebeeinrichtung zum Heben und/oder Absenken wenigstens einer der Dosatorscheiben (24, 25, 26) aufweist.

9. Dosatoreinrichtung nach wenigstens einem der vorangegangenen Ansprüche,
**dadurch gekennzeichnet, dass**
wenigstens zwei Dosatorscheiben (25, 26) unabhängig voneinander bewegbar und insbesondere heb- und/oder senkbar sind.

10. Dosatoreinrichtung nach Anspruch9,
**dadurch gekennzeichnet, dass**
die Hebeeinrichtung von wenigstens einer Dosatorscheibe (25. 26) entkoppelbar ist.

11. Dosatoreinrichtung nach Anspruch 9,
**dadurch gekennzeichnet, dass**
die Hebeeinrichtung wenigstens einen Pneumatikzylinder und/oder einen hydraulischen Zylinder und/oder einen elektromotorischen Antrieb aufweist.

12. Dosatoreinrichtung nach wenigstens einem der vorangegangenen Ansprüche,
**dadurch gekennzeichnet, dass**
wenigstens eine Dosatorscheibe (25. 26) bezüglich einer vorgegebenen Drehachse drehbar ist.

13. Plattenproduktionsanlage mit einer Dosatoreinrichtung nach wenigstens einem der vorangegangenen Ansprüche.

14. Verfahren zum Behandeln und insbesondere Reinigen einer Dosatoreinrichtung (1) für eine Plattenproduktionseinrichtung, wobei die Dosatoreinrichtung (1) eine Einfülleinrichtung (2), insbesondere einem Einfülltrichter zum Einfüllen eines zu dosierenden Materials für die Produktion von Platten, und einen Dosatortopf (23) zur Aufnahme des zu dosierenden Materials aufweist, und wobei die Dosatoreinrichtung weiterhin eine Mehrzahl von Dosatorscheiben (24, 25, 26) aufweist,
**dadurch gekennzeichnet, dass**
diese Dosatorscheiben (24, 25, 26) wenigstens zeitweise in einer vorgegebenen Verschieberichtung gegenüber einander verschoben werden, insbesondere um derart gegenüber einander beabstandet zu werden.

15. Verfahren nach Anspruch 14,
**dadurch gekennzeichnet, dass**
die Dosatorscheiben (24, 25, 26) in wenigstens zwei unterschiedliche Stellungen bezüglich einander verschoben werden.
